# EUROPÄISCHE PATENTSCHRIFT

(11) **EP 2 426 798 B1**
(45) Veröffentlichungstag und Bekanntmachung des Hinweises auf die Patenterteilung: **22.04.2015**
(21) Anmeldenummer: 10175367.1
(22) Anmeldetag: 06.09.2010
(51) Int. Cl.: H02B 1/052

(54) **Haltevorrichtung für ein elektrisches Gerät**
Holding device for an electric device
Dispositif de maintien d'un appareil électrique

(43) Veröffentlichungstag der Anmeldung: 07.03.2012
(73) Patentinhaber: GIRA Giersiepen GmbH & Co. KG, 42477 Radevormwald (DE)
(72) Erfinder: Schwarzer, Carsten, 43499 Hückeswagen (DE)
(74) Vertreter: Zapf, Christoph

(56) Entgegenhaltungen:
- EP-A2- 0 794 602
- DE-C1- 4 200 836
- DE-U1- 9 406 323
- DE-U1- 20 013 054
- US-A- 3 382 416
- US-A- 4 991 061
- US-A- 5 135 415

## Beschreibung

Die vorliegende Erfindung betrifft gemäß dem Oberbegriff des unabhängigen Anspruchs 1 eine Haltevorrichtung zum Befestigen eines elektrischen Gerätes an einem Trägerteil, insbesondere an einer Tragschiene (so genannte Hutschiene) in einem Anschlusskasten, Verteilerkasten, Schaltschrank oder dergleichen Einrichtung der Gebäude-Elektro-Installationstechnik, mit einem Verbindungsadapter, der unterschiedliche Abstände des Gerätes von dem Trägerteil ermöglicht.

Eine solche "Adaptervorrichtung" ist in dem Dokument DE 200 13 054 U1 beschrieben.

In der Elektro-Installationstechnik ist es seit langem bekannt und üblich, in Anschluss- und Verteilerkästen, Schaltschränken und dergleichen bestimmte elektrische Geräte, wie Sicherungsautomaten, Fehlerstrom-Schutzschalter (FI-Schalter) usw., als Reiheneinbaugeräte (REG) an Tragschienen, insbesondere so genannten Hutschienen, zu befestigen. Dazu weist jedes Gerät Haltemittel in Form einer Schienenaufnahme zum Aufsetzen auf die Tragschiene mit rastender Arretierung auf.

In manchen Fällen ist es zudem erwünscht, auch solche Installationsgeräte in gleicher Weise an Tragschienen zu montieren, die eigentlich für eine Installation unter Putz in UP-Dosen konzipiert sind. Für solche Geräte gibt es bei der REG-Montage spezielle Einbausituationen, wobei das jeweilige montierte Gerät auf seiner der Tragschiene abgewandten Vorderseite entweder von einer zusätzlichen Schutzabdeckung abgedeckt oder aber im Bereich einer Öffnung der Schutzabdeckung zur manuellen Bedienung bestimmter Bedienelemente, beispielsweise Schalter, erreichbar sein soll. Diese verschiedenen Einbausituationen machen auch verschiedene Haltemittel erforderlich.

Das oben bereits genannte, nächstkommende Dokument DE 200 13 054 U1 beschreibt eine Adaptervorrichtung mit einem ersten Befestigungsteil mit Befestigungsmitteln zum Befestigen auf einer Hutschiene, einem zweiten Befestigungsteil mit Befestigungsmitteln für ein Gerät sowie einem zwischen den beiden Befestigungsteilen angeordneten Verlängerungsarm, der zur stufenlosen Veränderung des Abstandes des Gerätes von der Hutschiene teleskopartig auseinanderziehbar ist. Dazu besteht der Verlängerungsarm aus zwei Teilen, die über eine Schwalbenschwanzverbindung teleskopartig miteinander verbunden sind. Bei dieser bekannten Ausführung erfolgt somit eine Abstandsänderung nur stufenlos allein im Bereich des Verlängerungsarms durch Verstellung der Schwalbenschwanz-Teile. Somit ist bei der Einstellung jeweils eine Abstandsmessung und -einstellung erforderlich.

Der vorliegenden Erfindung liegt die Aufgabe zu Grunde, Mittel zu schaffen, um nahezu beliebige elektrische Installationsgeräte auf besonders schnelle und einfache Weise und in Anpassung an verschiedene Einbausituationen an einem Trägerteil, insbesondere einer Tragschiene befestigen zu können.

Erfindungsgemäß wird dies gemäß dem unabhängigen Anspruch 1 durch einen speziellen Verbindungsadapter erreicht, der einseitig Haltemittel zur Befestigung an dem Trägerteil aufweist und anderseitig mit dem Gerät verbunden oder verbindbar und dabei derart ausgebildet ist, dass das Gerät an dem Verbindungsadapter wahlweise in (mindestens) zwei verschiedenen Montagepositionen mit unterschiedlichen, aber genau vorgegebenen Niveauabständen von dem Trägerteil befestigbar ist. Zudem ist gemäß der Erfindung vorgesehen, dass der Verbindungsadapter zweiteilig aus einem die Haltemittel zur Befestigung an dem Trägerteil aufweisenden Sockelteil und einem dem Gerät zugeordneten Geräteteil ausgebildet ist, wobei das Sockelteil und das Geräteteil über Verbindungsmittel lösbar in zwei verschiedenen Ausrichtungen miteinander verbindbar sind, und zwar wahlweise in einer ersten Montageposition mit einem größeren Niveauabstand oder - nach einer relativen Drehung um insbesondere 180° in einer zwischen den beiden Teilen liegenden Verbindungsebene - in einer zweiten Montageposition mit einem geringeren Niveauabstand voneinander. Demnach fungiert der erfindungsgemäße Verbindungsadapter einerseits als Anschlussadapter, um auch solche Geräte, die selbst keine entsprechenden Haltemittel aufweisen, an dem Trägerteil befestigen zu können. Andererseits gestattet der erfindungsgemäße Verbindungsadapter eine Montage des Gerätes in zwei unterschiedlichen Niveauabständen vom Trägerteil, so dass das Gerät vorteilhafterweise mit ein und demselben Verbindungsadapter wahlweise entweder mit seiner Vorderseite unter einer Schutzabdeckung oder manuell zugänglich eine Öffnung der Schutzabdeckung durchgreifend oder etwa in der Öffnungsebene liegend montiert werden kann.

Konkret ist es dazu vorteilhaft, wenn die Verbindungsmittel als zumindest Zweipunkt-, insbesondere aber Dreipunkt-Rastverbindung ausgebildet sind und einerseits aus mindestens zwei, insbesondere drei Rastelementen und andererseits aus zwei Gruppen von je mindestens zwei insbesondere drei Gegenrastelementen bestehen, wobei die beiden Gruppen der Gegenrastelemente in zwei verschiedenen Ebenen liegen und zueinander derart symmetrisch angeordnet sind, dass die Rastelemente in den beiden Montagepositionen mit jeweils einer der beiden Gruppen der Gegenrastelemente zusammenwirken.

Weitere vorteilhafte Ausgestaltungsmerkmale sind in den abhängigen Ansprüchen sowie der anschließenden Beschreibung enthalten.

Anhand eines in der Zeichnung veranschaulichten, bevorzugten Ausführungsbeispiels soll die Erfindung im Folgenden genauer erläutert werden. Es zeigen:
- Fig. 1: eine Perspektivansicht einer erfindungsgemäßen Haltevorrichtung mit einem beispielhaften elektrischen Gerät in einer ersten Montageposition,
- Fig. 2: eine Seitenansicht in Pfeilrichtung II gemäß Fig. 1 mit Darstellung einer Tragschiene und einer Schutzabdeckung,
- Fig. 3: eine perspektivische Explosionsdarstellung von Einzelteilen zu den Fig. 1 und 2,
- Fig. 4-7: Darstellungen zu der ersten Montageposition gemäß Fig. 1 und 2, und zwar:

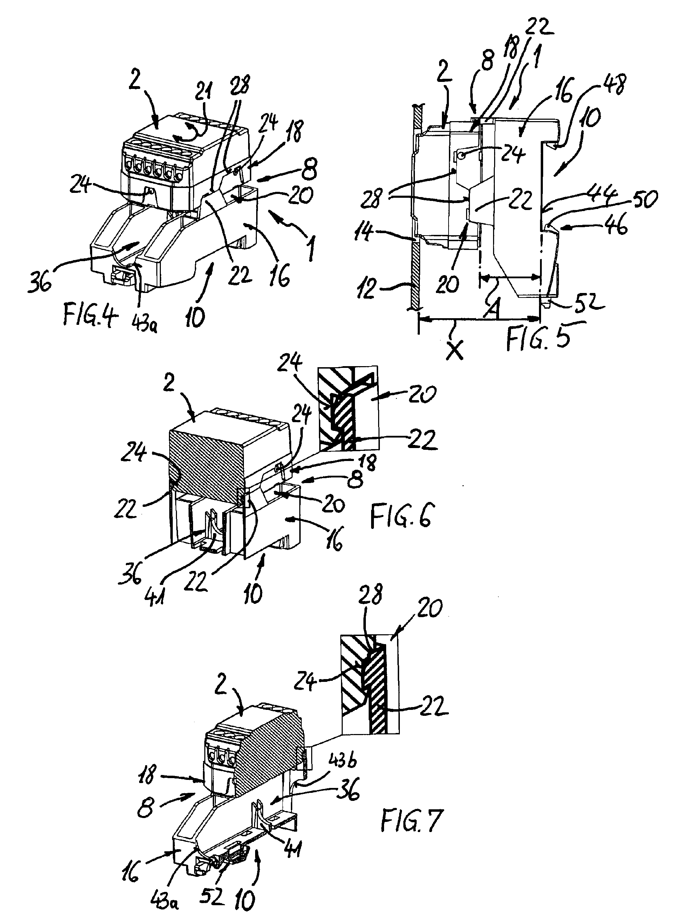

Fig. 4 eine weitere, jedoch verkleinerte Perspektivansicht aus einer anderen Blickrichtung,

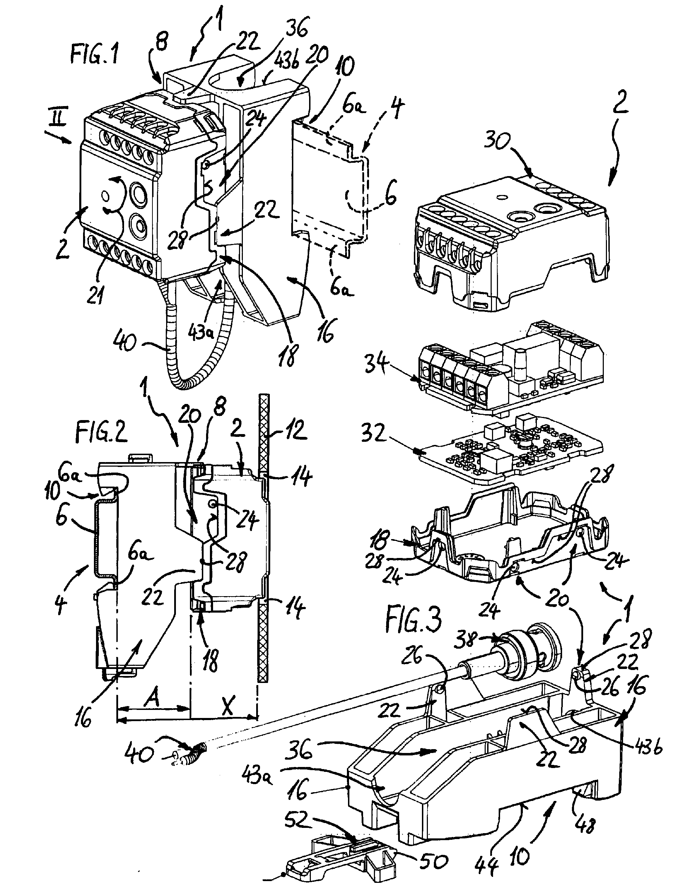

Fig. 5 eine Seitenansicht ähnlich Fig. 2, jedoch spiegelverkehrt und ohne Tragschiene,
Fig. 6 einen vereinfachten Querschnitt durch den Bereich von Rastmitteln mit Ausschnittvergrößerung,
Fig. 7 einen vereinfachten Längsschnitt ebenfalls durch den Bereich von Rastmitteln mit Ausschnittvergrößerung,

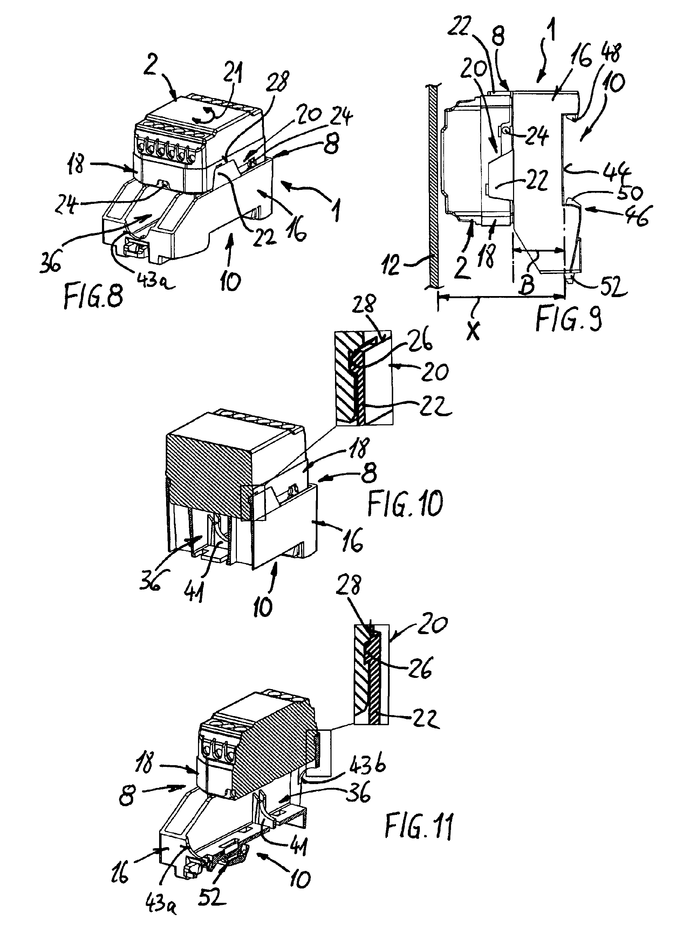

- Fig. 8-11: Darstellungen analog zu den Fig. 4 bis 7, jedoch in einer zweiten Montageposition,

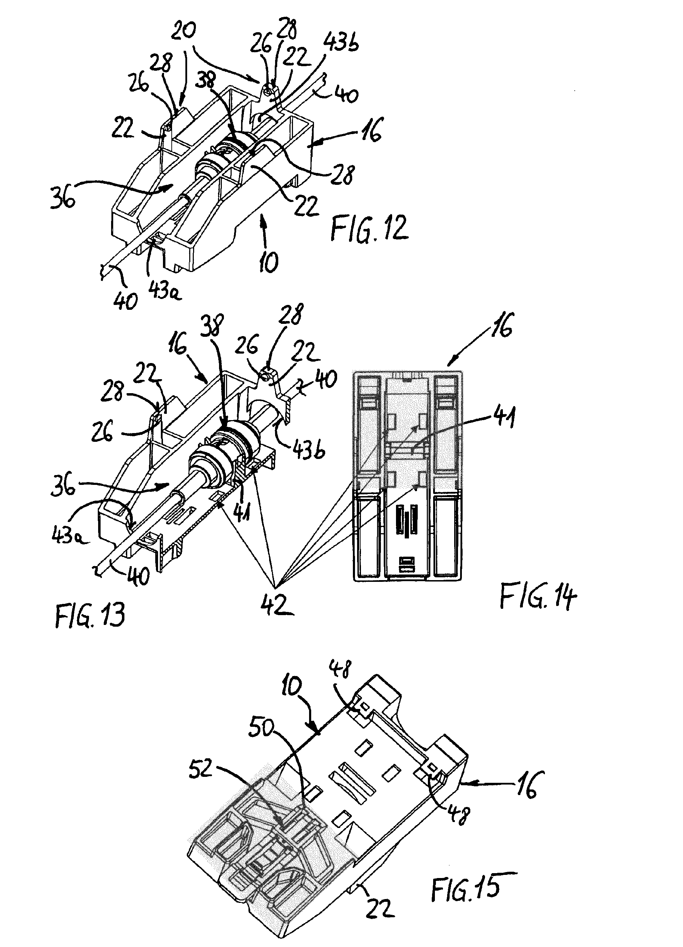

- Fig. 12: eine Perspektivansicht eines Einzelteils der erfindungsgemäßen Haltevorrichtung, und zwar eines Sockelteils in einer vorteilhaften Ausgestaltung zur Aufnahme einer Leitungs-Steckverbindung,
- Fig. 13: einen Längsschnitt des Einzelteils gemäß Fig. 12,
- Fig. 14: eine Draufsicht ohne Leitungs-Steckverbindung und
- Fig. 15: eine Perspektivansicht des Einzelteils gemäß Fig. 12 bis 14 auf dessen Unterseite.

In den verschiedenen Figuren der Zeichnung sind gleiche Teile stets mit den gleichen Bezugszeichen versehen.

Eine erfindungsgemäße Haltevorrichtung 1 dient zum Befestigen eines elektrischen Gerätes 2 an einem Trägerteil 4, und zwar insbesondere an einer Tragschiene 6, einer so genannten Hutschiene, die aus einem U-förmigen Profil mit zwei nach außen umgewinkelten Haltestegen 6a besteht.

Die Haltevorrichtung 1 besteht erfindungsgemäß aus einem Verbindungsadapter 8, der einseitig Haltemittel 10 zur Befestigung an dem Trägerteil 4 aufweist, und der anderseitig mit dem Gerät 2 verbunden oder verbindbar ist. Dabei ist der Verbindungsadapter 8 erfindungsgemäß derart ausgebildet, dass das Gerät 2 durch zwei unterschiedliche Montagearten des Verbindungsadapters 8 wahlweise in zwei verschiedenen Montagepositionen mit unterschiedlichen Niveauabständen von dem Trägerteil 4 befestigbar ist, und zwar gemäß Fig. 1, 2 sowie 4 bis 7 mit einem ersten, größeren Niveauabstand A oder gemäß Fig. 8 bis 11 mit einem zweiten, geringeren Niveauabstand B.

In einem üblichen Schaltkasten oder dergleichen ist in aller Regel eine in den Fig. 2, 5 und 9 jeweils angedeutete, isolierende Schutzabdeckung 12 vorgesehen, die in einem bestimmten Abstand X von der Tragschiene 6 bzw. von einer durch die Haltestege 6a der Tragschiene(n) definierten Montageebene dazu parallel angeordnet ist, um spannungsführende Teile abzudecken.

Der erfindungsgemäße Verbindungsadapter 8 macht es auf einfache Weise möglich, das Gerät 2 entweder - gemäß Fig. 1 bis 7 - in dem größeren Niveauabstand A oder aber - gemäß Fig. 8 bis 11 - mit dem kleineren Niveauabstand B zu montieren, wobei die Abstände A und B in Anpassung an das Gerät 2 und an den oben erwähnten Abstand X so ausgelegt sind, dass in der ersten Montageposition mit dem Abstand A das Gerät 2 mit seiner Vorderseite im Bereich einer Öffnung 14 der Schutzabdeckung 12 liegt oder diese sogar durchgreift (Fig. 2 und 5), während in der zweiten Montageposition mit dem Abstand B das Gerät 2 vollständig unterhalb der- in diesem Bereich dann öffnungsfreien - Schutzabdeckung 12, von dieser überdeckt angeordnet ist (Fig. 9).

In bevorzugter Ausgestaltung ist dazu der Verbindungsadapter 8 zweiteilig ausgebildet; er besteht aus einem die Haltemittel 10 zur Befestigung an dem Trägerteil 4 bzw. der Tragschiene 6 aufweisenden Sockelteil 16 und einem dem Gerät 2 zugeordneten Geräteteil 18. Das Sockelteil 16 und das Geräteteil 18 sind über Verbindungsmittel 20 lösbar in zwei verschiedenen Ausrichtungen miteinander verbindbar, und zwar wahlweise entweder in der ersten Montageposition mit einem größeren Abstand voneinander oder nach einer relativen Drehung um insbesondere 180° in der Verbindungsebene (vgl. die in Fig. 1, 4 und 8 eingezeichneten Doppelpfeile 21) in einer zweiten Montageposition mit einem geringeren Abstand voneinander. In der dargestellten, bevorzugten Ausführungsform sind die Verbindungsmittel 20 als Dreipunkt-Rastverbindung ausgebildet, und sie bestehen einerseits aus drei Rastelementen 22 und andererseits aus zwei Gruppen von jeweils drei Gegenrastelementen 24. Die Zuordnung der Rast- und Gegenrastelemente 22, 24 zu den beiden Teilen des erfindungsgemäßen Verbindungsadapters 8 ist grundsätzlich beliebig. In der bevorzugten Ausführung weist das Sockelteil 16 die Rastelemente 22 und das Geräteteil 18 die Gegenrastelemente 24 auf, dies kann aber auch umgekehrt sein. Die jeweils drei Gegenrastelemente 24 jeder Gruppe definieren gemeinsam eine Ebene, und die von den beiden Gruppen der Gegenrastelemente 24 definierten Ebenen liegen parallel zueinander versetzt. Zudem sind die beiden Gruppen der Gegenrastelemente 24 derart symmetrisch angeordnet, dass die gleichen drei Rastelemente 22 in den beiden verschiedenen Montagepositionen mit jeweils einer der beiden Gruppen der Gegenrastelemente 24 zusammenwirken können. In der dargestellten, bevorzugten Ausführungsform ist weiterhin vorgesehen, dass das Sockelteil 16 die Rastelemente 22 in Form von drei vorstehenden, federelastischen Rastarmen mit endseitigen, nach innen weisenden Rastnasen 26 aufweist (s. dazu insbesondere Fig. 3, 12 und 13). Die Gegenrastelemente 24 sind an dem Geräteteil 18 in Form von in Seitenflächen gebildeten Rastausnehmungen (Vertiefungen) angeordnet (s. insbesondere Fig. 3). Wie dargestellt weisen sowohl das Sockelteil 16 als auch das Geräteteil 18 eine zumindest angenähert rechteckige Grundform auf, wobei die die Rastelemente 22 bildenden Rastarme einerseits gegenüberliegend an zwei Seiten sowie an einer beiden Seiten benachbarten dritten Seite angeordnet sind. Die Gegenrastelemente 24 sind in den beiden Gruppen von je drei Gegenrastelementen 24 symmetrisch an vier Seiten des Geräteteils 18 angeordnet. Im miteinander verbundenen Zustand umgreift das Sockelteil 16 mit den Rastelementen 22 die entsprechenden drei Seitenflächen des Geräteteils 18, wobei die Rastnasen 26 jeweils in die drei zugehörigen Gegenrastelemente 24 eingreifen. Zumindest die zwei einander gegenüberliegenden Rastelemente 22 (Rastarme) weisen eine große Breite auf, so dass sie durch großflächige Anlage an den Seitenflächen des Geräteteils 18 dieses gut und kippfrei halten.

In weiterer vorteilhafter Ausgestaltung weisen die Verbindungsmittel 20 zusätzliche Auflageabschnitte 28 zur wenigstens linienförmigen Stützanlage zwischen dem Sockelteil 16 und dem Geräteteil 18 in den beiden Montagepositionen auf. Dies trägt ebenfalls zu einer guten, gegen relatives Verkippen gesicherten Halterung bei.

Das dem jeweiligen Gerät 2 zugeordnete Geräteteil 18 kann grundsätzlich fester Bestandteil des jeweiligen Gerätes 2 sein. Wie sich insbesondere aus Fig. 3 ergibt, ist bei der dargestellten Ausführung vorgesehen, dass das Geräteteil 18 als Teil eines Gerätegehäuses ausgebildet ist, und zwar insbesondere als ein Gehäuse-Unterteil, welches mit einem Oberteil 30 verbindbar ist. In Fig. 3 sind beispielhaft bestimmte Bauteile bzw. Komponenten 32, 34 dargestellt, die in dem Gehäuse des Gerätes 2 untergebracht sind.

Alternativ zu dieser bevorzugten Ausführung, wobei das Gehäuse-Unterteil in einer speziellen Ausgestaltung das Geräteteil 18 des erfindungsgemäßen Verbindungsadapters 8 bildet, könnte grundsätzlich auch eine Ausführung vorgesehen sein, wobei ein vollständig geschlossenes, d. h. ein eigenes Gehäuse aufweisendes Gerät 2 über ein zusätzliches Geräteteil 18 des Verbindungsadapters 8 und geeignete Haltemittel befestigt wird.

Die dargestellte, bevorzugte Ausführung führt allerdings zu einer besonders geringen Bauhöhe der gesamten Anordnung. Dazu kann auch das Gehäuse-Oberteil 30 noch Randbereiche aufweisen, die an die spezielle Kontur der Auflageabschnitte 28 der Verbindungsmittel 20 angepasst ist. Dies lässt sich am besten der Darstellung in Fig. 3 entnehmen.

Wie sich noch aus Fig. 3 und Fig. 12 bis 15 ergibt, ist in einer weiteren vorteilhaften Ausgestaltung vorgesehen, dass der Verbindungsadapter 8 - insbesondere im Bereich seines Sockelteils 16 - einen kanalartigen Aufnahmeraum 36 zur Aufnahme und fixierten Halterung einer Leitungs-Steckverbindung 38 insbesondere einer Koaxialleitung 40 aufweist. Bei der Steckverbindung 38 handelt es sich bevorzugt um einen so genannten BNC-Steckverbinder, zu dessen Halterung und Fixierung innerhalb des Aufnahmeraums 36 eine U-förmige Halterung 41 angeordnet ist. Zudem weist das Sockelteil 16 gemäß Fig. 13 und 14 Öffnungen 42 für nicht dargestellte Kabelbinder auf, die jeweils durch zwei Öffnungen 42 und um die Leitung herum verlaufend montiert werden. Eine der beiden über die Steckverbindung 38 verbundenen Leitungen 40 ist durch eine Öffnung 43a aus dem Aufnahmeraum 36 heraus und unter Bildung einer Schlaufe zu dem Gerät 2 geführt und dort angeschlossen. Die andere Leitung 40 führt zu einem anderen, externen Gerät, wozu das Sockelteil 16 eine weitere Öffnung 43b aufweist (s. insbesondere Fig. 12 und 13). Insbesondere handelt es sich um eine Leitungsverbindung zu einer elektronischen Kamera, wobei das Gerät 2 als Kamera-Anschlussmodul insbesondere einer Hauskommunikationsanlage ausgebildet ist.

Für die bevorzugte Ausgestaltung des Trägerteils 4 als Trag- bzw. Hutschiene 6 sind die Haltemittel 10 des Verbindungsadapters 8 bzw. des Sockelteils 16 als geeignete Schienenaufnahme 44 mit Rastung 46 ausgebildet. Wie sich insbesondere aus Fig. 5 und 9 ergibt, sind innerhalb der Schienenaufnahme 44 einerseits ein festes Ansatzelement 48 und andererseits ein die Rastung 46 bildendes, federelastisch bewegliches Ansatzelement 50 so angeordnet, dass die Ansatzelemente 48, 50 die Haltestege 6a der Tragschiene 6 hintergreifen können. Das bewegliche Ansatzelement 50 ist Bestandteil eines federnd gelagerten Rastschiebers 52, s. insbesondere Fig. 3 und 15.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Haltevorrichtung (1) zum Befestigen eines elektrischen Gerätes (2) an einem Trägerteil (4), mit einem Verbindungsadapter (8), der einseitig Haltemittel (10) zur Befestigung an dem Trägerteil (4) aufweist und anderseitig mit dem Gerät (2) verbunden oder verbindbar ist, wobei der Verbindungsadapter (8) zweiteilig aus einem die Haltemittel (10) zur Befestigung an dem Trägerteil (4) aufweisenden Sockelteil (16) und einem dem Gerät (2) zugeordneten Geräteteil (18) derart ausgebildet ist, dass das Gerät (2) über den Verbindungsadapter (8) wahlweise in verschiedenen Montagepositionen mit unterschiedlichen Niveauabständen (A; B) von dem Trägerteil (4) befestigbar ist,
**dadurch gekennzeichnet, dass** das Sockelteil (16) und das Geräteteil (18) über Verbindungsmittel (20) lösbar in zwei verschiedenen Ausrichtungen miteinander verbindbar sind, wobei die Verbindungsmittel (20) als zumindest Zweipunkt-Rastverbindung ausgebildet sind und einerseits aus mindestens zwei Rastelementen (22) und andererseits aus zwei Gruppen von je mindestens zwei Gegenrastelementen (24) bestehen, wobei die beiden Gruppen der Gegenrastelemente (24) in verschiedenen Ebenen liegen und zueinander derart symmetrisch angeordnet sind, dass die Rastelemente (22) in den beiden Montagepositionen mit jeweils einer der beiden Gruppen der Gegenrastelemente (24) derart zusammenwirken, dass die Verbindungsmittel (20) wahlweise in einer ersten Montageposition mit einem größeren Abstand voneinander oder - nach relativer Drehung um 180° in einer Verbindungsebene - in der zweiten Montageposition mit einem geringeren Abstand voneinander miteinander verbindbar sind.

2. Haltevorrichtung nach Anspruch 1,
**dadurch gekennzeichnet, dass** die Verbindungsmittel (20) Auflageabschnitte (28) zur wenigstens linienförmigen Stützanlage zwischen dem Sockelteil (16) und dem Geräteteil (18) in den beiden Montagepositionen aufweisen.

3. Haltevorrichtung nach Anspruch 1 oder 2,
**dadurch gekennzeichnet, dass** das Sockelteil (16) die Rastelemente (22) in Form von drei federelastischen Rastarmen mit endseitigen Rastnasen (26) aufweist, wobei die Gegenrastelemente (24) an dem Geräteteil (18) in Form von in Seitenflächen gebildeten Rastausnehmungen angeordnet sind, wobei das Sockelteil (16) mit den Rastelementen (22) die Seitenflächen des Geräteteils (18) umgreift und die Rastelemente (22) mit den Rastnasen (26) in die jeweiligen Gegenrastelemente (24) eingreifen.

4. Haltevorrichtung nach einem der Ansprüche 1 bis 3,
**dadurch gekennzeichnet, dass** der Verbindungsadapter (8) - insbesondere im Bereich des Sockelteils (16) - einen kanalartigen Aufnahmeraum (36) zur Aufnahme und fixierten Halterung einer Leitungs-Steckverbindung (38) aufweist.

5. Haltevorrichtung nach einem der Ansprüche 1 bis 4,
**dadurch gekennzeichnet, dass** die Haltemittel (10) des Verbindungsadapters (8) als Schienenaufnahme (44) mit Rastung (46) in Anpassung an das als Tragschiene (6), insbesondere so genannte Hutschiene, eines elektrischen Anschlusskastens, Schaltschrankes oder dergleichen ausgebildete Trägerteil (4) ausgebildet sind.

6. Haltevorrichtung nach einem der Ansprüche 1 bis 5,
**dadurch gekennzeichnet, dass** das Geräteteil (18) zumindest als Teil eines Gerätegehäuses, insbesondere als ein Gehäuse-Unterteil des elektrischen Gerätes (2), ausgebildet ist.

7. Sockelteil (16) für einen Verbindungsadapter (8) der Haltevorrichtung (1) nach einem der Ansprüche 1 bis 6,
**gekennzeichnet durch** eine Ausgestaltung entsprechend den das Sockelteil (16) betreffenden Merkmalen mindestens eines der Ansprüche 1 bis 6.

8. Geräteteil (18) für einen Verbindungsadapter (8) der Haltevorrichtung (1) nach einem der Ansprüche 1 bis 6,
**gekennzeichnet durch** eine Ausgestaltung entsprechend den das Geräteteil (18) betreffenden Merkmalen mindestens eines der Ansprüche 1 bis 6.

## Claims

1. Holding apparatus (1) for fastening an electrical device (2) to a support part (4), having a connecting adapter (8) which, on one side, has holding means (10) for fastening to the support part (4) and, on the other side, is or can be connected to the device (2), wherein the connecting adapter (8) is formed in two parts from a base part (16), which has the holding means (10) for fastening to the support part (4), and a device part (18), which is associated with the device (2), in such a way that the device (2) can be fastened selectively in the different mounting positions at different level spacings (A; B) from the support part (4) by means of the connecting adapter (8),
**characterized in that** the base part (16) and the device part (18) can be connected to one another in a releasable manner in two different orientations by means of connecting means (20), wherein the connecting means (20) are in the form of an at least two-point latching connection and firstly comprise at least two latching elements (22) and secondly comprise two groups of in each case at least two mating latching elements (24), wherein the two groups of mating latching elements (24) lie in different planes and are arranged symmetrically in relation to one another in such a way that the latching elements (22) interact with in each case one of the two groups of mating latching elements (24) in the two mounting positions in such a way that the connecting means (20) can be selectively connected to one another at a relatively large distance from one another in a first mounting position or - after relative rotation through 180° in a connecting plane - at a relatively small distance from one another in the second mounting position.

2. Holding apparatus according to Claim 1,
**characterized in that** the connecting means (20) have bearing sections (28) for providing at least linear supporting contact between the base part (16) and the device part (18) in the two mounting positions.

3. Holding apparatus according to Claim 1 or 2,
**characterized in that** the base part (16) has the latching elements (22) in the form of three spring-elastic latching arms with latching lugs (26) at the end, wherein the mating latching elements (24) are arranged on the device part (18) in the form of latching recesses which are formed in side faces, wherein the base part (16) engages around the side faces of the device part (18) by way of the latching elements (22), and the latching elements (22) engage into the respective mating latching elements (24) by way of the latching lugs (26).

4. Holding apparatus according to one of Claims 1 to 3,
**characterized in that** the connecting adapter (8) has - in particular in the region of the base part (16) - a channel-like receiving space (36) for receiving and holding in a fixed manner a line plug connection (38).

5. Holding apparatus according to one of Claims 1 to 4,
**characterized in that** the holding means (10) of the connecting adapter (8) are in the form of a rail receptacle (44) with latching means (46) matched to the support part (4) which is in the form of a supporting rail (6), in particular so-called top-hat rail, of an electrical terminal box, switchgear cabinet or the like.

6. Holding apparatus according to one of Claims 1 to 5,
**characterized in that** the device part (18) is at least in the form of part of a device housing, in particular in the form of a housing lower part of the electrical device (2).

7. Base part (16) for a connecting adapter (8) of the holding apparatus (1) according to one of Claims 1 to 6,
**characterized by** a configuration in accordance with those features of at least one of Claims 1 to 6 which relate to the base part (16).

8. Device part (18) for a connecting adapter (8) of the holding apparatus (1) according to one of Claims 1 to 6,
**characterized by** a configuration in accordance with those features of at least one of Claims 1 to 6 which relate to the device part (18).

## Revendications

1. Dispositif de maintien (1) pour fixer un appareil électrique (2) sur une partie de support (4), comprenant un adaptateur de connexion (8) qui, d'un côté, comprend des moyens de maintien (10) pour la fixation sur la partie de support (4) et, de l'autre côté, est connecté ou peut être connecté à l'appareil (2), l'adaptateur de connexion (8) étant réalisé en deux parties à partir d'une partie de socle (16) comprenant les moyens de maintien (10) pour la fixation sur la partie de support (4) et d'une partie d'appareil (18) associée à l'appareil (2), de telle sorte que l'appareil (2) puisse, par le biais de l'adaptateur de connexion (8), être fixé de manière sélective dans différentes positions de montage présentant différents écarts de niveau (A ; B) par rapport à la partie de support (4),
**caractérisé en ce que** la partie de socle (16) et la partie d'appareil (18) peuvent être connectées l'une à l'autre de manière amovible dans deux orientations différentes par le biais de moyens de connexion (20), les moyens de connexion (20) étant réalisés sous forme de liaison par encliquetage au moins à deux points et étant constitués, d'une part, d'au moins deux éléments d'encliquetage (22) et, d'autre part, de deux groupes d'au moins deux éléments d'encliquetage conjugués (24) respectifs, les deux groupes d'éléments d'encliquetage conjugués (24) se situant dans des plans différents et étant disposés de manière symétrique l'un par rapport à l'autre, de telle sorte que les éléments d'encliquetage (22) coopèrent respectivement avec l'un des deux groupes d'éléments d'encliquetage conjugués (24) dans les deux positions de montage, de telle sorte que les moyens de connexion (20) puissent être connectés les uns aux autres de manière sélective dans une première position de montage dans laquelle ils présentent un plus grand écart les uns par rapport aux autres ou, après une rotation relative de 180° dans un plan de connexion, dans la deuxième position de montage dans laquelle ils présentent un plus petit écart les uns par rapport aux autres.

2. Dispositif de maintien selon la revendication 1,
**caractérisé en ce que** les moyens de connexion (20) comprennent des portions d'appui (28) pour un appui de support au moins linéaire entre la partie de socle (16) et la partie d'appareil (18) dans les deux positions de montage.

3. Dispositif de maintien selon la revendication 1 ou 2,
**caractérisé en ce que** la partie de socle (16) comprend les éléments d'encliquetage (22) sous la forme de trois bras d'encliquetage élastiques pourvus d'ergots d'encliquetage d'extrémité (26), les éléments d'encliquetage conjugués (24) étant disposés sur la partie d'appareil (18) sous la forme d'évidements d'encliquetage formés dans des surfaces latérales, la partie de socle (16) comprenant les éléments d'encliquetage (22) venant en prise autour des surfaces latérales de la partie d'appareil (18) et les éléments d'encliquetage (22) pourvus des ergots d'encliquetage (26) venant en prise dans les éléments d'encliquetage conjugués (24) respectifs.

4. Dispositif de maintien selon l'une quelconque des revendications 1 à 3,
**caractérisé en ce que** l'adaptateur de connexion (8) comprend, en particulier dans la région de la partie de socle (16), un espace de réception (36) de type canal pour la réception et le maintien fixé d'une connexion enfichable de conducteur (38).

5. Dispositif de maintien selon l'une quelconque des revendications 1 à 4,
**caractérisé en ce que** les moyens de maintien (10) de l'adaptateur de connexion (8) sont réalisés sous forme de logement de rail (44) avec encliquetage (46) de manière adaptée à la partie de support (4) réalisée sous forme de profilé support (6), en particulier dit profilé chapeau, d'une boîte de raccordement électrique, d'une armoire de distribution ou similaire.

6. Dispositif de maintien selon l'une quelconque des revendications 1 à 5,
**caractérisé en ce que** la partie d'appareil (18) est réalisée au moins en tant que partie d'un boîtier d'appareil, en particulier en tant que partie inférieure de boîtier de l'appareil électrique (2).

7. Partie de socle (16) pour un adaptateur de connexion (8) du dispositif de maintien (1) selon l'une quelconque des revendications 1 à 6,
**caractérisée par** une configuration correspondant aux caractéristiques concernant la partie de socle (16) d'au moins l'une des revendications 1 à 6.

8. Partie d'appareil (18) pour un adaptateur de connexion (8) du dispositif de maintien (1) selon l'une quelconque des revendications 1 à 6,
**caractérisée par** une configuration correspondant aux caractéristiques concernant la partie d'appareil (18) d'au moins l'une des revendications 1 à 6.
